Europäisches Patentamt
European Patent Office
Office européen des brevets

(11) Publication number: **0 050 905**
**A1**

# EUROPEAN PATENT APPLICATION

(21) Application number: 81300335.7

(22) Date of filing: 26.01.81

(51) Int. Cl.³: C 10 J 3/54
C 10 J 3/56, C 10 J 3/46

(30) Priority: 27.10.80 GB 8034497

(43) Date of publication of application: 05.05.82 Bulletin 82/18

(84) Designated Contracting States: BE DE FR IT NL

(71) Applicant: British Gas Corporation
Rivermill House 152 Grosvenor Road
London SW1V 3JL(GB)

(72) Inventor: Tart, Keith Raymond
92 Buffery Road
Dudley West Midlands DY2 5EF(GB)

(72) Inventor: Wild, Keith Robert
205 Lazy Hill Kings North
Birmingham West Midlands B38 9PB(GB)

(74) Representative: Wallace, Walter
British Gas Corporation Patents Department 326 High Holborn
London, WC1V 7PT(GB)

## (54) Improvements in or relating to coal gasification process.

(57) A process for gasifying a carbonaceous fuels to produce carbon monoxide, hydrogen and methane in which a first stream of carbonaceous material is gasified in a high temperature partial oxidation zone (2) without bed formation the mineral matter content of the fuel being removed as molten slag. A second stream of carbonaceous material is entrained/fluidised in a rapid mixing (10) zone by the upflowing products from the partial oxidation zone and circulating char from a surrounding annular fluidised bed zone (11), the latter being fluidised by the addition of an appropriate agent.

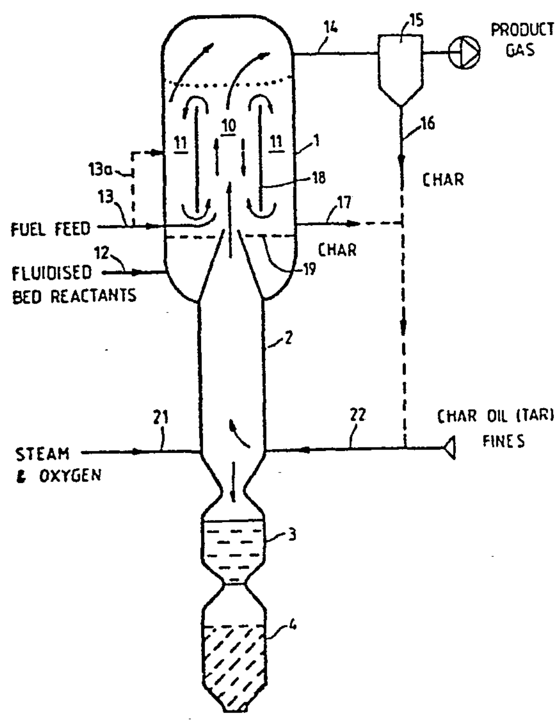


EP 0 050 905 A1

Croydon Printing Company Ltd.

This invention relates to the production of synthesis and fuel gases by the gasification of carbonaceous materials, particularly solid materials such as coal or char.

Processes have been developed for the gasification of coal and current interest is being focused on routes for the production of substitute natural gas (SNG) wherein the coal feedstock is gasified at high pressure and relatively low steam to carbon ratios under what is colloquially known as 'slagging conditions', ie where the mineral content of the feedstock is removed as molten slag.

Earlier developments in the fixed bed slagging gasifier required the use of coal in the form of lumps. However, recent advances in the coal industry for mechanising coal mining has resulted in a significant increase in the production of coal 'fines'. These fines are not suitable for use in the earlier developed fixed bed slagging gasifiers and further research has been undertaken to develop processes which can handle the 'fines' feeds as well as the unreacted 'chars' formed during the gasification of larger particle size coal feeds.

In our European Patent Office Publication No. 0000442 there is described a process and apparatus for gasifying such fines wherein the fines are gasified in an entrained flow gasification zone and the gaseous product from this zone is passed into a fixed bed gasification zone, which is fed with larger coal lumps. This process can handle a wide variety of coal feeds but relies on the, what is now 'conventional', technology of using a fixed bed for gasification of the larger coal particles.

Another multi stage slagging process utilising an entrained flow zone followed by a fluidised bed reaction zone is disclosed in US Patent No. 3971638. According to the teachings of this reference an aqueous slurry of fines is gasified in an entrained flow zone to provide a fluidising reagent for a fluidised bed of larger coal particles, additional gasification reagents being added separately to the fluidised bed reaction zone.

Fluidisation of the bed is achieved by passing the reaction products of the entrained flow zone, after quenching by a water spray, upwardly through a distributor plate located at the bottom of the fluidised bed reactor. Thus, effective and efficient operation of the fluidised bed zone is dependent upon accurate control of the entrained flow section.

The present invention seeks to provide a process and apparatus for gasifying a wide range of coal feeds, including a significant proportion of fines, utilizing a multi stage process employing both entrained-flow and fluidised bed gasification, but where the dependence of the fluidised zone upon the entrained zone is not nearly as critical as in the known processes.

Thus the invention seeks to provide a fully integrated, flexible and highly efficient multi-stage coal gasification process which does not suffer from the disadvantages associated with critical interstage dependence, such as described in the prior art.

In accordance with the present invention there is provided a process for the production of fuel or synthesis gases by the gasification of carbonaceous fuels wherein a first feed stream comprising liquid or fine particulate solid carbonaceous materials or liquid solid mixtures is reacted with steam and oxygen under partial oxidation conditions in an entrained flow gasification zone, the reaction product being admixed with a second feed stream comprising particulate solid carbonaceous material, and with particles from a recirculating fluidised bed of particles derived from the gasification of said second stream particles in the presence of gasifying agents, which are used to fluidise the bed.

The products from the entrained flow gasification zone (EZ product) pass directly to a rapid mixing zone where they are admixed with a second feed comprising particulate solid carbonaceous material and with cooler particles from a fluidised bed zone, these being derived from a circulation of solids between the rapid mixing and fluidised bed zones.

The rapid mixing zone is contained within a riser region of a reaction vessel having mounted therein at least one dividing member which is shorter than the internal length of the vessel and which divides the vessel into at least two regions, at least one to act as a riser for the rapid mixing zone and at least one to act as a downcomer for the fluidised bed.

The bed particles pass from the downcomer to the riser and meet with and mix with upwardly flowing stream of EZ product. More conveniently the riser may be formed by providing a cylindrical dividing partition, the outer annulus forming the downcomer and the central portion forming the riser and rapid mixing zone.

The solid particles within the riser zone may be in either fast-fluidised or fully entrained-flow suspension depending upon the geometry of the riser. Within the riser the EZ product is cooled from a temperature of from 1400 - 2000°C (at the bottom) to from 800 - 1100°C (at the top). Gas cooling within the riser obviates the need for recovery of high grade heat since the heat is tranferred directly to the circulating bed inventory solids and is therefore available for maintaining reaction in the fluidised bed after the solids pass over the top of the riser. Any entrained slag droplets from the entrained gasification zone are rapidly solidified as they enter the rapid mixing zone.

If the second feed contains volatile carbonaceous material then a large proportion of this will be gasified during its first travel through the rapid mixing zone to form predominantly hydrocarbon products. If this feed comprises caking type coals the above devolatilization process may be accompanied by a tendency for the particles to cohere or 'cake'. If such a coal were fed directly to a conventional fluidised bed loss of fluidisation could result. This drawback is overcome in the present invention by introducing the feed to the fluidised bed via the rapid mixing zone where because the flow region is either entrained or fast fluidised, caking during devolatilization is avoided.

Within the fluidised bed carbonaceous materials are reacted with an appropriate gasifying reagent, to form the desired product gas which will

exit from the top of the downcomer. The gaseous product from the fluidised bed section may be taken off in admixture with EZ product arising out of the rapid mixing zone or may be taken off separately.

The gasifying agents, as well as being reactants are employed as the fluidising agents for the bed and are therefore fed into the base of the fluidised bed through a suitable distributor.

The choice of fluidising reactant will depend upon the composition desired for the final product gas. If a medium Btu fuel gas, reducing gas, synthesis gas or hydrogen is the desired product, then water (steam) or carbon dioxide or a mixture thereof will be the main fluidising reactant, viz:

$$C + H_2O === CO + H_2$$
$$C + CO_2 === 2CO$$

If SNG or an SNG precursor is the required product then hydrogen could be employed as the main gasification reagent viz:

$$C + 2H_2 === CH_4$$

The operating temperature within the fluidised bed section will range from 800 - 1100°C. Most of the heat required to support the reactions will be supplied by the sensible heat content of the char passing over from the rapid mixing zone. Occasionally this sensible heat may not be sufficient to entirely support the reactions in the fluidised bed. In this case small quantities of oxygen may be included with the carbon dioxide, water, or $CO_2/H_2O$ mixture gasifying reagents. The addition of oxygen may not be applicable when hydrogen is used as the gasifying reactant.

The process of the invention is capable of being carried out over a wide range of operating pressures for example ranging from 10 - 2000 psig.

The entrained-flow gasification zone is a partial oxidation zone wherein carbon is reacted with oxygen (eg. in the form of air) and water (steam) according to the main reactions:

$$C + O_2 == CO_2$$
$$2C + O_2 == 2CO$$
$$CO + H_2O == CO_2 + H_2$$
$$C + H_2O == CO + H_2$$

The carbonaceous feedstock may be provided in the form of coal fines, oils, tars, and chars obtained directly from the fluidised bed and or carried over from the product gas.

Operation of the entrained flow stage at high temperature enables very high carbon conversion to be achieved rapidly. Thus the need to achieve high carbon conversion in the fluidised bed section is obviated since carbon residues for that section can be readily converted in the entrained flow section. The energy required to produce entrained-flow conditions is further utilized at no extra cost to promote rapid mixing in the fluidised bed zone to enable efficient operation in that zone. Furthermore, the heat produced by the partial oxidation reactions is usefully employed to sustain the fluidised bed reactions thereby avoiding the need for expensive and relatively inefficient heat recovery and heat transfer systems.

Within the entrained flow section, the operating temperatures are sufficiently high for the mineral content of the carbonaceous feedstock to form molten slag which is deposited on the walls of the entrained zone vessel. The slag is removed through a slag quench zone to be processed by conventional techniques.

The present invention will be described with reference to the accompanying drawing which is a schematic representation of a multistage apparatus suitable for carrying out the process of the invention.

The apparatus comprises a fluidised bed reactor 1 which at its lower end is in communication with an entrained flow reactor 2. Associated with the entrained flow reactor are a slag quench vessel 3 and a slag lock hopper 4.

Within reactor 1 is mounted a tubular dividing member 18 which divides the vessel interior into a cylindrical riser 10 which comprises a rapid mixing zone and an annular downcomer 11. Carbonaceous feedstock is fed into zone 10 through conduit 13 where it rapidly admixes with EZ product from reactor 2. At the top of zone 10 the gaseous product exits the reactor through outlet 14 and the solid material passes over divider 18 into the fluidised downcomer zone 11. Fluidisation in zone 11 is achieved by the upward passage of the fluidising reactants through a distributor 19 said reactants being fed to the reactor via line 12. Additional carbonaceous feedstock may be added directly to the fluidised bed downcomer zone 11 through line 13a. The gaseous products formed in zone 11 leave the top of the bed and exit the reactor via outlet 14. In an alternative embodiment (not shown) the off-takes for zones 10 and 11 may be separate.

A proportion of the solid particulate material from zone 11 is removed from the bottom of the zone via line 17 and this is mixed with solid particles carried over from the product gas, separated in cyclone 15 and transported in line 16. The chars from 16 and 17 are admixed with fresh fines etc and delivered to the entrained flow gasifier 2 via line 22.

The gaseous and solid (liquid) reactants are delivered to the entrained flow reactor 2 through lines 21 and 22 respectively and the reactants may be introduced into the reactor via a system of tuyeres (not shown). A suitable entrained flow reactor may be one such as described in our EPC publication No. 0000442.

The present invention also provides apparatus for the gasification of carbonaceous materials comprising a reactor having upper and lower zones in direct communication with each other, said upper zone having mounted therein at least one dividing member which is shorter than the internal length of said zone and which divides the zone into at least two regions, at least one to act as riser and rapid mixing zone and at least one to act as a downcomer; means for supplying carbonaceous fuel to the lower end of

said rapid mixing zone riser, and means for supplying gaseous reactants to the lower end of said downcomer, to initiate and sustain a fluidised bed in the region of the downcomer, means for supplying carbonaceous fuel and gasifying agents to initiate and maintain an entrained flow gasification reaction in said lower zone and wherein the exit from said lower zone is adjacent the rapid mixing zone.

Claims

1. A process for the production of fuel or synthesis gases by the gasification of carbonaceous fuels wherein a first feed stream comprising liquid or fine particulate solid carbonaceous materials or liquid solid mixtures is reacted with steam and oxygen under partial oxidation conditions in an entrained flow gasification zone, the reaction product being admixed with a second feed stream comprising particulate solid carbonaceous material, and with particles from a recirculating fluidised bed of particles derived from the gasification of said second stream particles in the presence of gasifying agents, which gasifying agents are used to fluidise the bed.

2. A process as claimed in claim 1 wherein admixing of the product gas from said entrained flow reaction zone with said second feed stream takes place in a riser portion of the recirculating bed.

3. A process as claimed in claim 2 wherein the gaseous product from the fluidised bed are removed separately from the gaseous products from the riser portion of the bed.

4. A process as claimed in one of the preceeding claims wherein said fluidising and gasifying reagents are supplied to substantially only a downcomer portion of said fluidised bed.

5. A process as claimed in any one of the preceding claims wherein the second feed stream comprises coal and the first feed stream is coal fines, tars, oils or chars derived from said second stream or mixtures thereof.

6. A process claimed in claim 5 wherein the gasifying and fluidising reagents comprise steam, carbon dioxide or mixtures thereof.

7. A process as claimed in claim 6 wherein oxygen is added to the gasifying and fluidising reagent.

8. A process as claimed in claim 7 wherein the oxygen is added as air.

9. A process as claimed in claim 5 wherein the gasifying and fluidising reagent comprises hydrogen.

10. A process as claimed in any one of the preceding claims wherein the entrained-flow gasification zone temperature ranges from 1400°C - 2000°C.

11. A process as claimed in any one of the preceding claims wherein the temperature at which said second stream of particles is gasified ranges from 800°C - 1100°C.

12. Apparatus for the gasification of carbonaceous materials comprising a reactor having upper and lower zones in direct communication with each other, said upper zone having mounted therein at least one dividing member which is shorter than the internal length of said zone and which divides the zone into at least two regions, at least one to act as riser and rapid mixing zone and at least one to act as a downcomer; means for supplying carbonaceous fuel to the lower end of said rapid mixing zone, and means for supply gaseous reactants to the lower end of said dowcomer, to initiate and sustain a fluidised bed in the region of the downcomer, means for supplying carbonaceous fuel and gasifying agents to initiate and maintain an entrained flow gasification reaction in said lower zone and wherein the exit from lower zone is adjacent the rapid mixing zone.

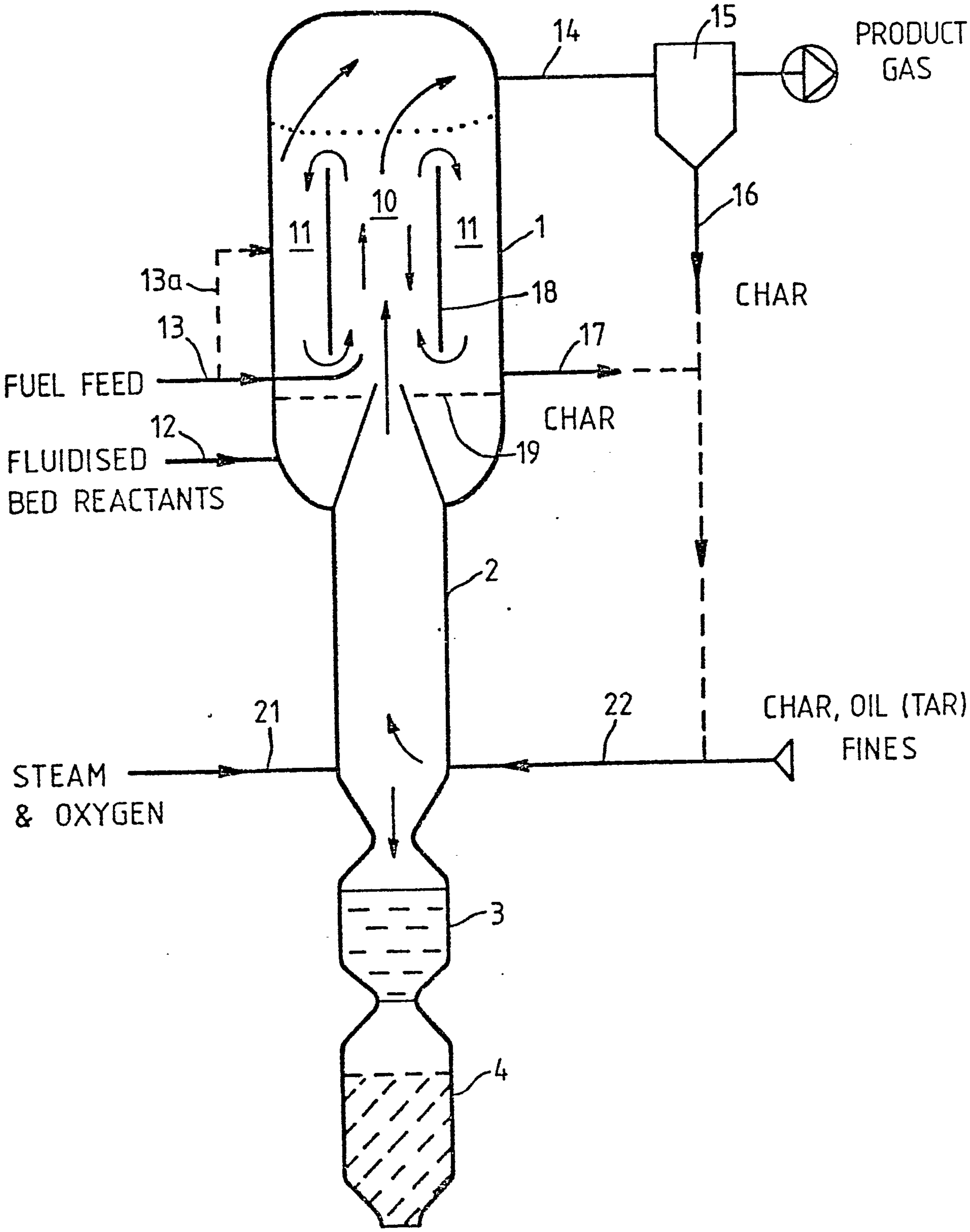
15
14
PRODUCT
GAS
10
11
11
1
16
CHAR
13a
18
13
17
FUEL FEED
CHAR
12
19
FLUIDISED
BED REACTANTS
2
21
22
CHAR, OIL (TAR)
FINES
STEAM
& OXYGEN
3
4

0050905

European Patent Office

# EUROPEAN SEARCH REPORT

Application number

EP 81 30 0335

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| D | US - A - 3 971 638 (C.W. MATTHEWS)<br>* column 4, line 12 - column 6, line 53; column 9, line 39 - column 10, line 15; column 17, line 64 - column 19, line 4; figure *<br>--- | 1,5,6,7 9,10,11 | C 10 J 3/54<br>3/56<br>3/46 |
| | US - A - 4 057 402 (J.G. PATEL)<br>* column 2, line 41 - column 3, line 2; column 5, line 9 - column 6, line 14; column 6, line 50 - column 7, line 19; figure *<br>--- | 1,5-8, 11 | |
| A | FR - A - 2 177 089 (BITUMINOUS COAL RESEARCH)<br>* page 10, line 1 - page 11, line 6 *<br>--- | | TECHNICAL FIELDS SEARCHED (Int.Cl. 3)<br>C 10 J 3/46<br>3/48<br>3/54<br>3/56 |
| A | US - A - 3 945 809 (E.E. DONATH)<br>* column 2, line 47 - column 3, line 32; figure *<br>--- | | |
| A | GB - A - 1 047 711 (THE GAS COUNCIL)<br>* page 5, line 90 - page 6, line 54; figure 2 *<br>--- | | CATEGORY OF CITED DOCUMENTS<br>X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on, or after the filing date<br>D. document cited in the application<br>L: document cited for other reasons |
| D, A | EP - A - 0 000 442 (BRITISH GAS CORP.)<br>--------- | | |
| X | The present search report has been drawn up for all claims | | &: member of the same patent family, corresponding document |

| Place of search | Date of completion of the search | Examiner |
|---|---|---|
| The Hague | 14-01-1982 | PYFFEROEN |

EPO Form 1503.1 06.78